# FASCICULE DE BREVET EUROPEEN

(11) **EP 1 582 280 B1**
(45) Date de publication et mention de la délivrance du brevet: **04.07.2007**
(21) Numéro de dépôt: 05290554.4
(22) Date de dépôt: 14.03.2005
(51) Int. Cl.: B23D 35/00

(54) **Dispositif de découpe de métaux, en particulier de découpe de profilés métalliques**
Schneidvorrichtung zum Schneiden von Metallen, besonders zum Schneiden von Metallprofilen
Cutting device for cutting metals, in particular for cutting metal profiles

(30) Priorité: 29.03.2004 FR 0403244
(43) Date de publication de la demande: 05.10.2005
(73) Titulaire: Dorguin, Jean-Pierre, F-08430 Mondigny (FR)
(72) Inventeur: Dorguin, Jean-Pierre, F-08430 Mondigny (FR)
(74) Mandataire: Kaspar, Jean-Georges

(56) Documents cités:
- EP-A- 0 755 742
- WO-A-00/54916
- US-A- 5 187 868
- US-A- 5 531 007
- US-A- 5 894 666
- US-A- 5 926 958

## Description

L'invention est relative à un dispositif de découpe de métaux, en particulier de découpe de profilés métalliques. Selon le préambule de la revendication 1. Un tel dispositif est par exemple décrit dans le document US 5 926 958.

On connaît des cisailles destinées à découper la ferraille, comportant des lames fixées à des mâchoires en mouvement relatif l'une par rapport à l'autre et actionnées par un ou plusieurs vérins.

Une des mâchoires, généralement appelée « mâchoire femelle », peut être munie d'un contre-appui empêchant l'écartement de l'autre mâchoire, appelée généralement « mâchoire mâle » lors de la coupe.

Les mâchoires femelles peuvent présenter une conformation droite ou une conformation en bec.

Lors de la découpe de tôles ou de profilés débordant l'extrémité des mâchoires, il existe un risque d'arrachement de métal ou de coincement des mâchoires rendant l'outil de coupe indisponible jusqu'au décoincement du matériau métallique par l'opérateur. En outre, les efforts importants subis par la structure de la cisaille peuvent entraîner la rupture des composants de la cisaille ou leur usure rapide.

Pour remédier à ces inconvénients, on a prévu de placer des lames de coupe au niveau de la mâchoire femelle. Cependant, même dans ce cas, l'usure rapide de l'extrémité de la mâchoire mâle entraîne une baisse du rendement, un temps d'immobilisation important pour recharger par soudure cette extrémité, une diminution des caractéristiques de la mâchoire mâle due à la soudure, et une durée de vie limitée de la mâchoire mâle et de la cisaille.

Des cisailles à ferraille comportant au moins une lame de coupe au niveau de la mâchoire femelle sont décrites notamment dans les documents US 4.519.135, US 5.060.378, US 5.531.007, US 5 187 868, EP 0 755 742, WO 00/54916 et US 5 926 958.

L'invention a pour but de remédier aux inconvénients de la technique connue, en proposant un nouveau dispositif de découpe de métaux, présentant une durée de vie importante, une durée d'immobilisation réduite et une productivité améliorée.

L'invention a pour objet un dispositif de découpe de métaux, en particulier de découpe de profilés métalliques, selon la revendication 1.

Selon d'autres caractéristiques préférentielles de l'invention :
- le bloc de découpe fixé à une mâchoire mâle du dispositif est conformé de manière à assurer une découpe périmétrique en coopération avec des lames de la mâchoire femelle.
- le bloc de découpe fixé à une mâchoire mâle du dispositif est de préférence conformé de manière réversible.
- le bloc de découpe fixé à une mâchoire mâle du dispositif comporte un moyen de positionnement sur ladite mâchoire mâle du dispositif

L'invention sera mieux comprise grâce à la description qui va suivre donnée à titre d'exemple non limitatif en référence aux dessins annexés dans lesquels :
La figure 1 représente schématiquement une vue en perspective d'un premier mode de réalisation de dispositif selon l'invention.
La figure 2 représente schématiquement une vue en perspective d'un bloc de découpe destiné au dispositif de la figure 1.
La figure 3 représente schématiquement une vue en perspective d'un deuxième mode de réalisation de dispositif selon l'invention.
La figure 4 représente schématiquement une vue en perspective de dessous du dispositif de la figure 3.
La figure 5 représente schématiquement une vue en perspective analogue à la figure 4, dans laquelle le bloc de découpe a été démonté de la mâchoire mâle.
La figure 6 représente schématiquement une vue en perspective d'un bloc de découpe destiné au dispositif des figures 3 à 5.

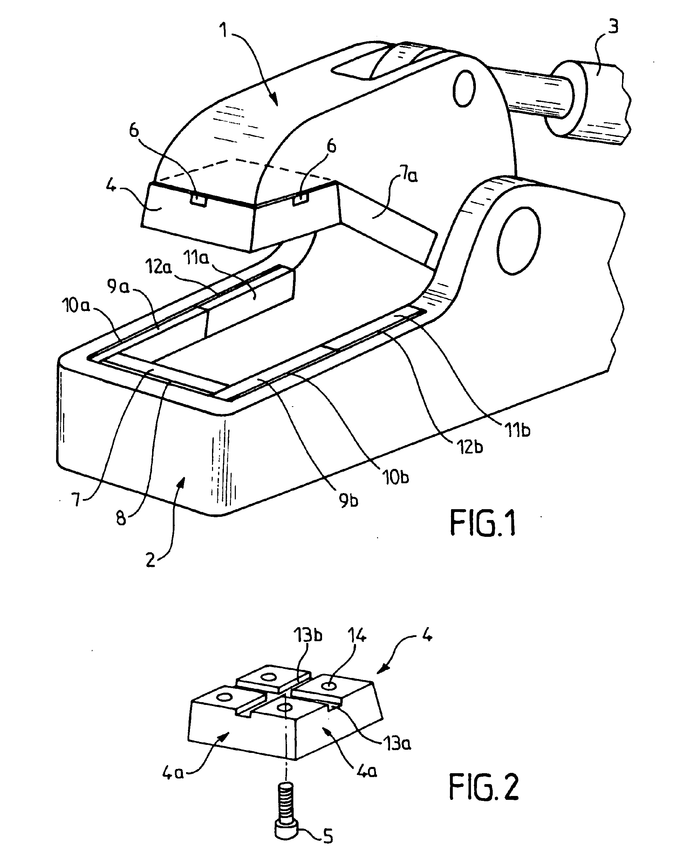

En référence aux figures 1 et 2, les éléments identiques ou fonctionnellement équivalents sont repérés par des chiffres de références identiques.

Sur la figure 1, un dispositif selon l'invention comporte une mâchoire mâle 1, et une mâchoire femelle 2, dont l'ouverture et la fermeture sont commandées par au moins un actionneur 3, par exemple un vérin hydraulique.

La mâchoire mâle 1 porte un bloc 4 de découpe fixé à l'aide d'au moins une vis 5 et positionné par coopération avec des nervures 6 ou parties en relief prévues sur la mâchoire mâle 1. La mâchoire mâle 1 peut également porter une lame arrière 7a assurant la découpe de profilés présentant des dimensions inférieures à l'ouverture de la cisaille.

La mâchoire femelle 2 porte une lame avant 7, fixée à l'aide de vis appropriées non représentées avec interposition d'une cale 8. La mâchoire femelle 2 porte également des lames latérales 9a, 9b fixées à l'aide de vis appropriées non représentées avec interposition de cales 10a, 10b ; ainsi que des lames arrières 11a, 11b fixées à l'aide de vis appropriées non représentées avec interposition de cales 12a, 12b.

Les lames 7, 9a, 9b, 11a, 11b sont indépendantes les unes des autres, de manière à être réglées séparément en réglant le jeu, respectivement à l'aide de chaque cale 8, 10a, 10b , 11a, 11b associée.

Le démontage de chaque lame de la mâchoire femelle 2 est également indépendant, et s'effectue à l'aide des vis appropriées non représentées.

Les lames arrières 11a, 11b permettent la découpe de profilés présentant des dimensions inférieures fixées à l'aide de vis appropriées non représentées à l'ouverture de la cisaille.

Sur la figure 2, le bloc 4 de découpe est conformé de manière à présenter quatre faces de cisaillement, assurant une découpe périmétrique en coopération avec les lames 7, 10a, 10b de la mâchoire femelle 2.

Le bloc de découpe 4 est de préférence réalisé d'un seul tenant avec possibilité de réversibilité pour user uniformément les faces 4a de cisaillement et de découpe.

Le bloc 4 de découpe est encastré sur les nervures 6 de la mâchoire mâle 1 grâce aux rainures 13a, 13b en croix, en assurant ainsi un positionnement précis du bloc 4 de découpe.

Le bloc 4 de découpe est fixé de préférence à l'aide de quatre vis 5 passant à travers des alésages ou logements 14 symétriques par rapport à la croix 13a, 13b de positionnement.

Les mâchoires mâle 1 et femelle 2 sont actionnées l'une par rapport à l'autre à l'aide d'un ou plusieurs vérins 3 ou par tout autre moyen d'actionnement. Lors du croisement des mâchoires mâle 1 et femelle 2, le recouvrement complet des lames équipant les mâchoires assure le cisaillement complet du matériau métallique, en évitant ainsi tout risque de coincement et d'immobilisation de la machine.

L'évacuation du morceau métallique découpé par les mâchoires mâle 1 et femelle 2 est assurée automatiquement à travers la mâchoire femelle 2, quelles que soient les dimensions du matériau métallique ou du profilé à découper.

En particulier, la découpe périmétrique obtenue grâce à l'invention, permet de poinçonner ou de crever une tôle entière, ou un profilé entier en sectionnant simultanément les ailes et l'âme du profilé.

L'invention permet ainsi d'éviter tout risque d'arrachement ou de découpe incomplète de matériau métallique, et supprime les efforts anormalement élevés dus au coincement du matériau métallique dans la cisaille.

En outre, le remplacement rapide d'un bloc de découpe 4 permet d'obtenir une précision de coupe durable, une conservation de la géométrie de la cisaille, et un positionnement précis des surfaces 4a de coupe.

En raison du fait qu'aucun rechargement par soudure n'est nécessaire, aucune modification métallurgique des composants de la cisaille n'est à craindre.

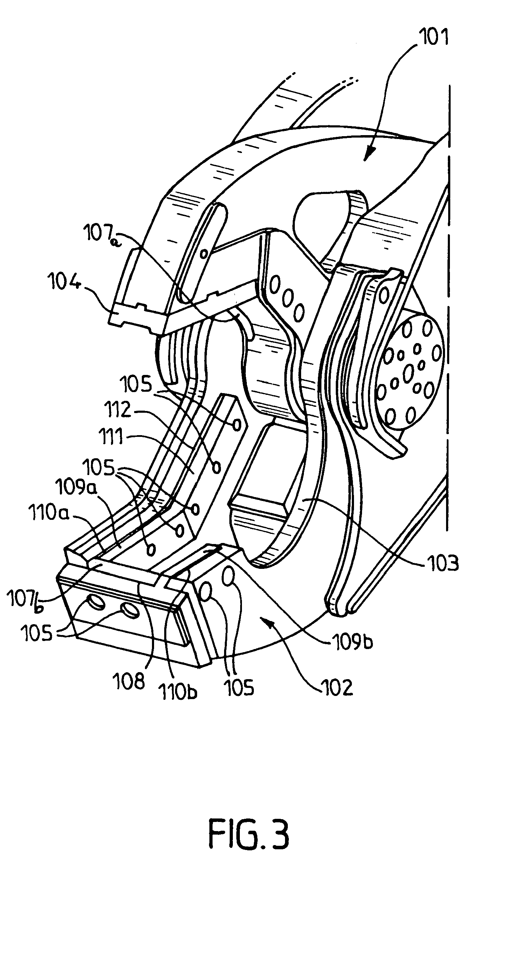

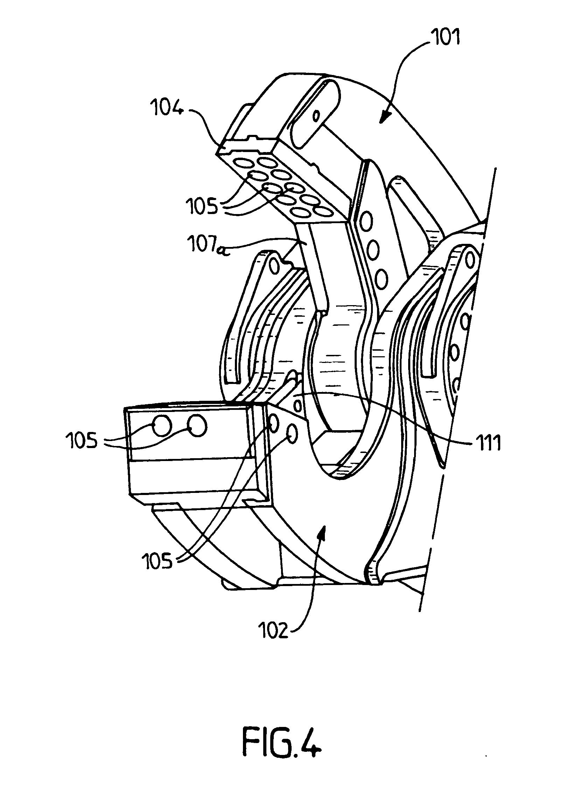

En référence aux figures 3 à 6, un autre dispositif selon l'invention présente une mâchoire mâle 101 et une mâchoire femelle 102 dont l'ouverture et la fermeture sont commandées par des actionneurs hydrauliques non représentés.

La mâchoire mâle 101 porte un bloc de découpe 104 positionné par coopération de nervures et de rainures prévues à cet effet.

La mâchoire femelle 102 porte une lame avant 107 avec interposition d'une cale 108, une lame latérale 109a avec interposition d'une cale 110a et une autre lame latérale 109b avec interposition d'une cale 110b.

La mâchoire femelle 102 porte dans ce mode de réalisation une lame arrière unique 111 avec interposition d'une cale 112 et présente une échancrure 103 facilitant l'engagement d'un matériau métallique dans la mâchoire femelle 102.

La mâchoire mâle 101 comporte également une lame arrière unique 107 destinée à coopérer avec la lame arrière 111 de la mâchoire femelle 102 pour découper des profilés de dimensions inférieures à l'ouverture de la cisaille.

Les lames 107b, 109a, 109b, 111 de la mâchoire femelle 102 et 107a de la mâchoire mâle 101 sont fixées indépendamment les unes des autres au moyen de vis 105 appropriées.

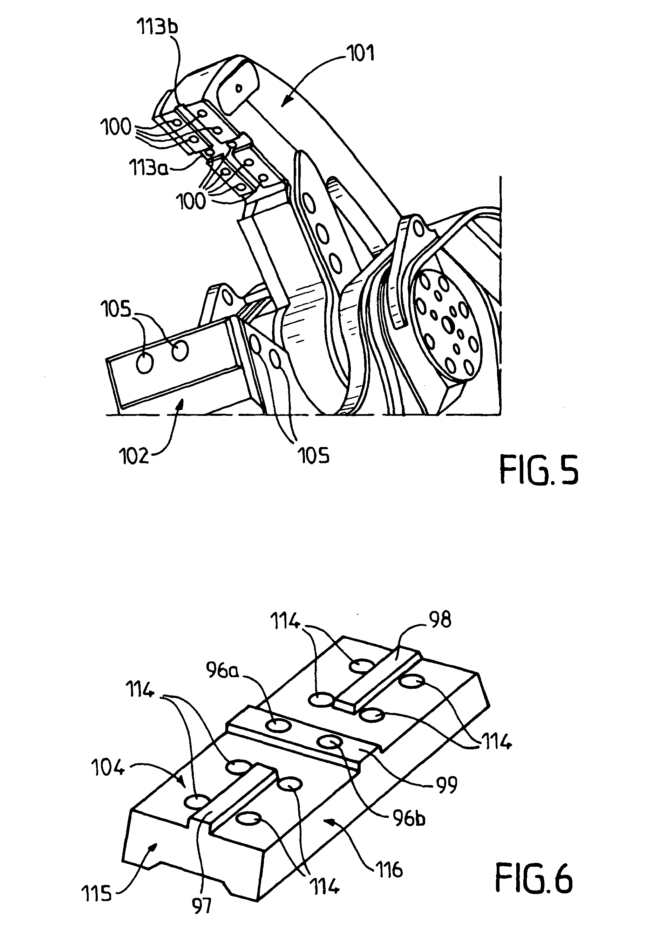

Sur la figure 5, la mâchoire mâle 101 présente des taraudages 100 repartis symétriquement par rapport à deux rainures 113a, 113b formant une croix de positionnement pour le bloc de découpe 104 représenté à la figure 6.

On peut avantageusement prévoir que la rainure transversale 113a présente également en fond de rainure des taraudages 100 assurant le placage du bloc 104 au fond de la rainure 113a.

La fixation du bloc 104 sur la mâchoire 101 peut ainsi s'effectuer avantageusement à l'aide d'un nombre important de vis 105, par exemple au moyen de dix vis 105.

Sur la figure 6, le bloc 104 de découpe présente trois nervures 97, 98, 99. Les nervures longitudinales 97 et 98 sont de préférence alignées , de manière à assurer le positionnement transversal du bloc 104 de découpe par coopération avec la rainure 113b de la mâchoire mâle 101.

La nervure transversale 99 présente deux alésages ou logements 96a, 96b de vis sensiblement symétriques par rapport à l'axe défini par l'alignement des nervures 97 et 98.

Les autres alésages ou logements 114 de vis du bloc 104 de découpe sont également symétriques par rapport aux nervures 97 et 98 respectivement, en étant répartis de part et d'autre de la nervure centrale 99.

Le positionnement géométrique ainsi réalisé permet un retournement du bloc 104 de découpe pour assurer une continuité de la découpe par une face 115 de cisaillement avant, et par deux faces 116 de cisaillement latéral.

L'invention décrite en référence à deux modes de réalisation particuliers n'y est nullement limitée, mais couvre au contraire toute modification de forme et toute variante de réalisation de l'invention dans les limites des revendications.

## Revendications

1. Dispositif de découpe de métaux, en particulier de découpe de profilés métalliques, comportant des mâchoires (1,2 ; 101,102) en mouvement relatif l'une par rapport à l'autre, dans lequel les mâchoires (1,2 ; 101,102) en mouvement relatif l'une par rapport à l'autre portent des conformations coopérantes (4, 7a, 7, 9a, 9b, 11a, 11b; 104, 107a, 107b, 109a, 109b, 111) amovibles assurant une découpe périmétrique de métaux, en particulier de profilés métalliques, et dans lequel lesdites conformations coopérantes (4, 7a, 7, 9a, 9b, 11a, 11b; 104, 107a, 107b, 109a, 109b, 111) amovibles comportent un bloc (4;104) de découpe fixé à une mâchoire (1; 101) mâle du dispositif, **caractérisé par le fait que** le bloc (4; 104) présente quatre faces (4a, 115,116) de cisaillement.

2. Dispositif selon la revendication 1, **caractérisé par le fait que** le bloc (4;104) de découpe fixé à une mâchoire (1 ; 101) mâle du dispositif est conformé de manière à assurer une découpe périmétrique en coopération avec des lames (7, 9a, 9b; 107b; 110a,110b) de la mâchoire femelle (2; 102).

3. Dispositif selon la revendication 1 ou 2, **caractérisé par le fait que** le bloc (4,104) de découpe fixé à une mâchoire (1 ; 101) mâle du dispositif est conformé de manière réversible.

4. Dispositif selon la revendication 1 ou 2, **caractérisé par le fait que** le bloc (4,104) de découpe fixé à une mâchoire (1 ; 101) mâle du dispositif comporte un moyen (13a, 13b ; 97-99) de positionnement sur ladite mâchoire (1 ; 101) mâle du dispositif.

## Claims

1. A metal-cutting device, in particular for cutting out metal profiled elements, comprising jaws (1, 2; 101, 102) which move relative to one another, in which the jaws (1, 2; 101, 102) which move relative to one another have removable cooperating shapings (4, 7a, 7, 9a, 9b, 11a, 11b; 104, 107a, 107b, 109a, 109b, 111) which effect perimetrical cutting of metals, in particular of metal profiled elements, and in which said removable cooperating shapings (4, 7a, 7, 9a, 9b, 11 a, 11b; 104, 107a, 107b, 109a, 109b, 111) comprise a cutting block (4; 104) fixed to a male jaw (1; 101) of the device, **characterised by** the fact that the block (4; 104) has four shearing faces (4a, 115, 116).

2. A device according to Claim 1, **characterised by** the fact that the cutting block (4; 104) fixed to a male jaw (1; 101) of the device is shaped so as to effect perimetrical cutting in cooperation with blades (7, 9a, 9b; 107b; 110a, 110b) of the female jaw (2; 102).

3. A device according to Claim 1 or 2, **characterised by** the fact that the cutting block (4; 104) fixed to a male jaw (1; 101) of the device is reversibly shaped.

4. A device according to Claim 1 or 2, **characterised by** the fact that the cutting block (4; 104) fixed to a male jaw (1; 101) of the device comprises a means (13a, 13b; 97-99 for positioning on said male jaw (1; 101) of the device.

## Patentansprüche

1. Vorrichtung zum Schneiden von Metallen, insbesondere zum Schneiden von Metallprofilen, mit zwei relativ zueinander beweglichen Backen (1, 2; 101, 102), wobei die relativ zueinander beweglichen Backen (1, 2; 101, 102) zusammenwirkende, bewegliche Formgebungen (4, 7a, 7, 9a, 9b, 11a, 11b; 104, 107a, 107b, 109a, 109b, 111) tragen, die ein Schneiden von Metallen, insbesondere von Metallprofilen, in Umfangsrichtung sicherstellen, wobei die zusammenwirkenden, beweglichen Formgebungen (4, 7a, 7, 9a, 9b, 11a, 11 b; 104, 107a, 107b, 109a, 109b, 111) eine Schneideinheit (4; 104) umfassen, die an einer oberen Backe (1; 101) der Vorrichtung befestigt ist, **dadurch gekennzeichnet, daß** die Einheit (4; 104) vier Scherflächen (4a, 115, 116) aufweist.

2. Vorrichtung nach Anspruch 1, **dadurch gekennzeichnet, daß** die an einer oberen Backe (1; 101) der Vorrichtung befestigte Schneideinheit (4; 104) so geformt ist, daß sie ein Schneiden in Umfangsrichtung durch Zusammenwirken mit Schneiden (7, 9a, 9b; 107b, 110a, 110b) der unteren Backe (2; 102) sicherstellt.

3. Vorrichtung nach Anspruch 1 oder 2, **dadurch gekennzeichnet, daß** die an einer oberen Backe (1; 101) der Vorrichtung befestigte Schneideinheit (4; 104) auswechselbar ausgebildet ist.

4. Vorrichtung nach Anspruch 1 oder 2, **dadurch gekennzeichnet, daß** die an einer oberen Backe (1; 101) der Vorrichtung befestigte Schneideinheit (4; 104) eine Einrichtung (13a, 13b; 97-99) zur Positionierung an der oberen Backe (1; 101) der Vorrichtung umfaßt.
